# EUROPEAN PATENT APPLICATION

(11) **EP 1 211 907 A1**
(43) Date of publication of application: **05.06.2002**
(21) Application number: 01950046.1
(22) Date of filing: 24.07.2001
(51) Int. Cl.: H04Q 7/36

(54) **BASE STATION APPARATUS AND CHANNEL ASSIGNMENT METHOD**

(30) Priority: 28.07.2000 JP 2000228571
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP); SHOJI, Takahiro, Yokohama-shi, Kanagawa 221-0005 (JP)
(74) Representative: Grünecker, Kinkeldey, Stockmair & Schwanhäusser Anwaltssozietät
(86) International application number: JP0106386
(87) International publication number: WO0211480

(57) **Abstract**

A timing deviation measuring section 313 measures a reception timing deviation, which is a delay time in arrival time of an direct wave relative to a slot-front time, based on internal clock. A timetable 314 stores a table that indicates a range of reception timing deviation assigned to each slot. A channel assigning section 315 refers to the timetable 314 and decides an order of the slots to be subjected to channel retrieval based on the reception timing deviation measured by the timing deviation measuring section 313. Further, the channel assigning section 315 carries out a channel assignment of the downlink based on a CIR of the downlink and carries out a channel assignment of the uplink based on a CIR of the uplink. Owing to this, it is enabled to achieve a reuse partitioning even when an open loop transmitting power control is applied to the uplink.

## Description

### Technical Field

The present invention relates to a base station apparatus and a channel assigning method adopting dynamic channel assigning system, which is used in a cellular mobile communication system.

### Background Art

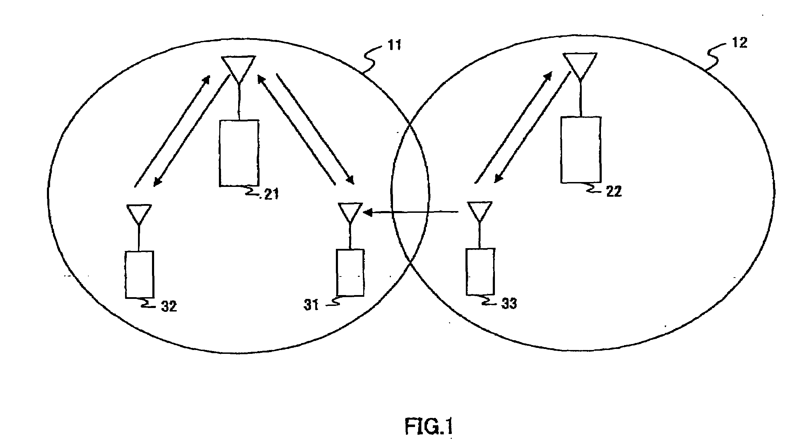

As shown in FIG. 1, in a mobile communication system, generally, the entire service area is divided into a plurality of cells, and each cell is provided with a base station apparatus. Each mobile station apparatus carries out radio communication with a base station apparatus in a cell that the own station is belonged to.

In a case of FIG. 1, mobile station apparatus 31 and 32, since both of them are belonged to a cell 11, carry out radio communication with a base station apparatus 21 which is provided in the cell 11. Likewise, a mobile station apparatus 33, since being belonged to a cell 12, carries out radio communication with a base station apparatus 22 which is provided in the cell 12.

Herein, each mobile station apparatus transmits signals of the uplink and receives signals of the downlink via a channel assigned by a base station apparatus. As a channel assigning method in a mobile communication system using a cellular system, conventionally, several methods have been proposed.

As an example of the channel assigning method, a method is disclosed in "Autonomous distributed dynamic channel assigning system (ARP) in a micro cell mobile communication system": Kanai Toshiji, TECHNICAL REPORT OF IEICE, RCS91-32 (1991). In the ARP (Autonomous Reuse Partitioning) system, channels are selected in accordance with the priority, which is identical for every cell, and out of the selected channels, of which CIR (Carrier to Interference Ratio) is not smaller than a predetermined threshold value, are used in order.

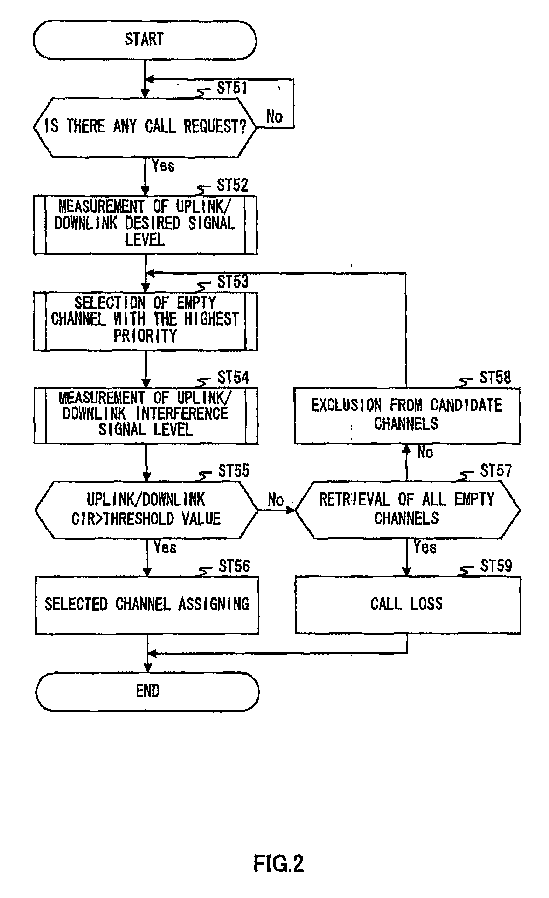

Now, referring to the flow sheet in FIG. 2, a description will be made as to channel assignment according to a conventional ARP system.

First of all, when a call request is made at step (hereinafter, abbreviated to ST) 51, the base station apparatus measures a desired signal level of the uplink, and the mobile station apparatus measures a desired signal level of the downlink at ST52.

Then, at ST53, the base station apparatus selects an empty channel having the highest priority in accordance with the order of priority, which is common to every base station apparatus. The word "empty channel" means, in TDMA system, an unused slot; while, in CDMA/TDD system, the word means an unassigned slot or a slot having an empty code resource, of which uplink and downlink is the same.

Then, at ST54, on the selected channel, the base station apparatus measures an interference signal level of the uplink, and the mobile station apparatus measures an interference signal level of the downlink.

Then, at ST55, the base station apparatus performs a large or small comparison between the CIR of the uplink and the downlink (hereinafter, referred to as "uplink CIR" and "downlink CIR") of the selected channel and the preset threshold value.

When both of the uplink CIR and the downlink CIR are larger than the threshold value, the base station apparatus assigns a call to the selected channel at ST56. On the other hand, when either the uplink CIR or the downlink CIR is not larger than the threshold value, at ST57, the base station apparatus decides whether any empty channel (hereinafter, referred to as "un-retrieved channel"), which has not been subjected to channel retrieval, resides therein or not.

When any un-retrieved channel is left, at ST58, after excluding channels which have been subjected to channel retrieval, the base station apparatus and the mobile station apparatus repeat the processing after ST53. On the other hand, when no un-retrieved channel is left, the base station apparatus terminates the processing as a call loss at ST59.

By carrying out ARP channel assignment, it is possible to achieve, what is called, a reuse partitioning [Halpern: "Reuse Partitioning in Cellular Systems", Proc. of VTC'83, pp.322-327(1983)]on each cell in a manner of autonomous distribution, in which an optimum number of repetition of cell(cell reuse factor)can be set on each channel based on the distance from the mobile station apparatus to the base station apparatus, i.e., the magnitude of propagation path loss.

Further, by achieving a reuse partitioning and since an optimum cell reuse factor is set, as the entire system, a larger number of calls can be received thereby.

Herein, in a radio communication system using a TDD system of which carrier frequency of the uplink and the downlink is the same, an open loop transmitting power control is effective for increasing the system capacity.

However, in a case where an open loop transmitting power control is applied to the uplink, since, in the base station apparatus, the received powers of the signals transmitted from the respective mobile station apparatus are aligned to a same level without depending on the distance between the base station apparatus and the mobile station apparatus, there resides such a problem that the reuse partitioning can not be achieved.

### Disclosure of Invention

An object of the present invention is to provide a base station apparatus and a channel assigning method that is capable of achieving a reuse partitioning even when an open loop transmitting power control is applied to the uplink.

The object can be achieved by, while directing the viewpoint to the fact that a reception timing deviation is proportional to a geographical distance of a mobile station apparatus to a base station apparatus, deciding the order of the slots to be subjected to channel retrieval based on the reception timing deviation.

### Brief Description of Drawings

FIG. 1 is a diagram showing a configuration of a mobile communication system;
FIG. 2 is a flow sheet showing an operation of a conventional channel assigning operation;
FIG. 3 is a diagram showing an example of a constitution of a mobile communication system to which the present invention is appropriately applied;
FIG. 4 is a diagram showing a configuration of a radio frame and a delay profile in a TDD system;
FIG. 5 is a block diagram showing a configuration of a base station apparatus according to an embodiment of the present invention;
FIG. 6 is a block diagram showing a configuration of a mobile station apparatus, which carries out radio communication with a base station apparatus, according to an embodiment of the present invention;
FIG. 7 is a diagram showing a configuration of a radio frame according to an embodiment of the present invention;
FIG. 8 is a diagram showing a table that indicates a range of reception timing deviations assigned to the respective slots according to an embodiment of the present invention; and
FIG. 9 is a flow sheet showing a channel assigning operation in a base station apparatus according to an embodiment of the present invention.

### Best Mode for Carrying Out the Invention

Now, referring to the drawings, a description will be made as to an embodiment of the present invention.

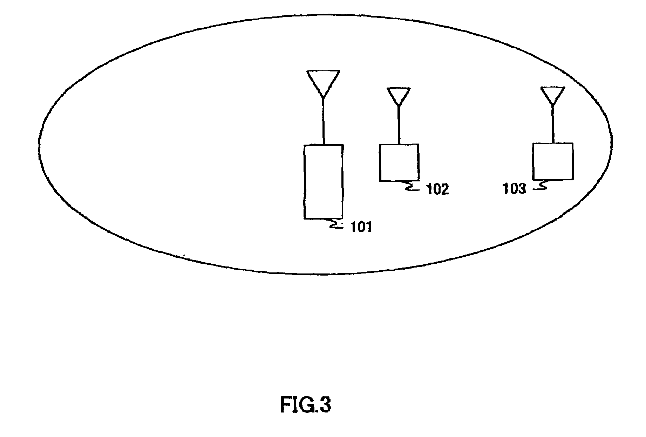

FIG. 3 is a diagram showing an example of a constitution of a mobile communication system to which the present invention is appropriately applied. In FIG. 3, a base station apparatus 101 constituting a cell carries out radio communication with a mobile station apparatus102 and a mobile station apparatus 103, which are located in the cell, in a manner of TDD system. Further, the mobile station apparatus 102 is located in a position where is closer to the base station apparatus 101 than the mobile station apparatus 103.

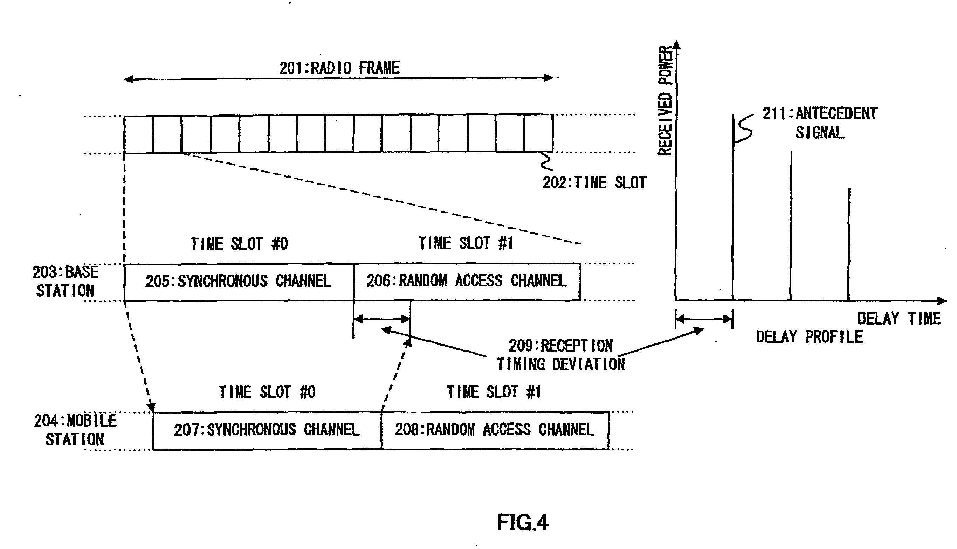

FIG. 4 is a diagram showing a configuration of a radio frame and a delay profile in a TDD system.

A radio frame 201, in which the uplink and the downlink have the same carrier frequency, is comprised of a plurality of time slots 202. In a base station apparatus 203, a mapping is made on a predetermined time slot of the radio frame 201 with a synchronous channel 205, and the frame is transmitted to a mobile station apparatus within the cell. When power supply is turned ON to a mobile station apparatus 204, the mobile station apparatus 204 acquires synchronization using the received synchronous channel 207.

Herein, the reception timing of the synchronous channel in the mobile station apparatus depends on a distance from the base station apparatus. For example, in the foregoing FIG. 3, in the mobile station apparatus102, which is located in a position closer to the base station apparatus 101 than the mobile station apparatus 103, the reception timing of the synchronous channel thereof is earlier than that in the mobile station apparatus 103.

Next, the mobile station apparatus 204 performs a call out request. To be concrete, the mobile station apparatus 204 superimposes a call out request control signal on a random access channel 208 and transmits the signal to the base station apparatus 203.

When the base station apparatus 203 receives the call out request control signal, the base station apparatus 203 measures a reception timing deviation 209. The reception timing deviation 209 is a difference between a slot-front time and an arrival time of an direct wave 211 of the random access channel 208 based on an internal clock.

Since the reception timing deviation 209 is proportional to a geographical distance of the mobile station apparatus 204 relative to the base station apparatus 203, the base station apparatus 203 can achieve reuse partitioning corresponding to the distance between the own station and the mobile station apparatus 204 by carrying out a channel assignment based on the reception timing deviation 209.

In the above description, although the reception timing deviation is estimated using the random access channel, the reception timing deviation may be estimated by using another channel.

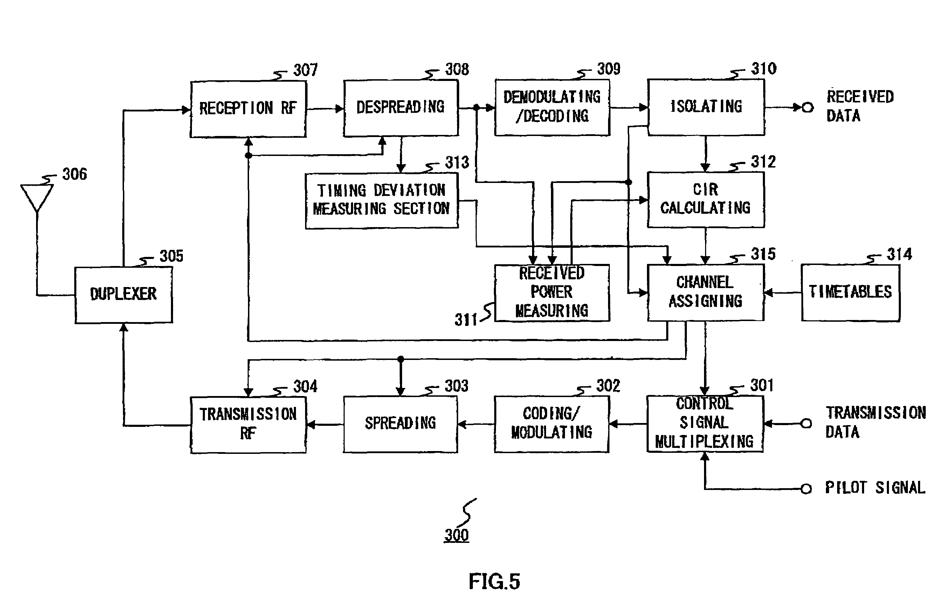

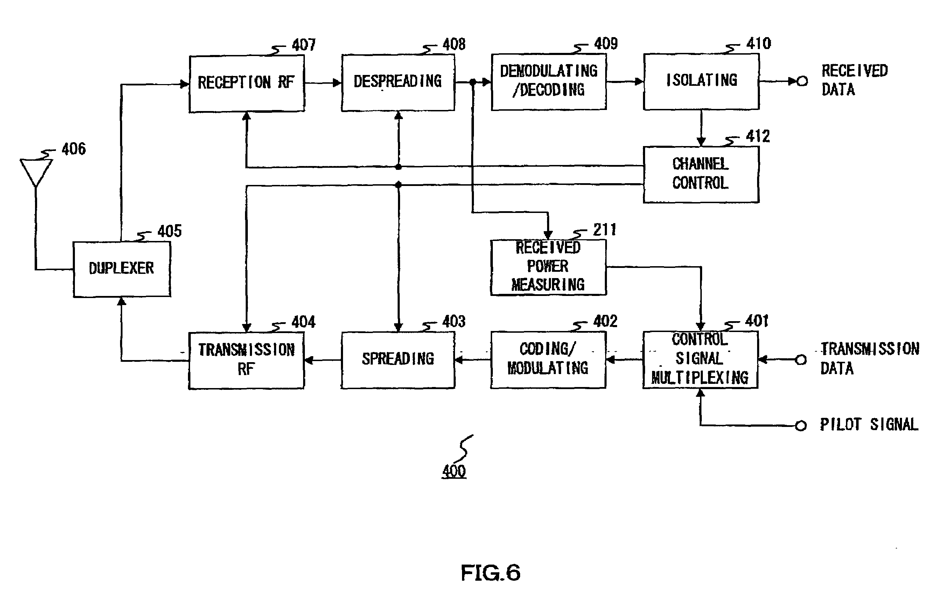

Now, a description will be made as to a schematic configuration of a base station apparatus according to an embodiment of the present invention. FIG. 5 is a block diagram showing a schematic configuration of a base station apparatus 300 according to an embodiment of the present invention; FIG. 6 is a block diagram showing a schematic configuration of a mobile station apparatus 400 which carries out radio communication with a base station apparatus 300 in FIG. 5.

The base station apparatus 300 and the mobile station apparatus 400 are to be applied to a mobile communication system of a CDMA/TDD system. In the CDMA/TDD system, the radio communication channel is specified by a time slot and a code.

In the base station apparatus 300 shown in FIG. 5, a control signal multiplexing section 301 multiplexes control signals such as pilot signal, channel assigning information or the like on a transmission data. The channel assigning information is the information that indicates the time slot and the code to which the communication channel of the own station is assigned.

A coding/modulating section 302 performs predetermined coding processing and modulating processing on an output signal of the control signal multiplexing section 301, and outputs the signal to a spreading section 303. The spreading section 303 performs spreading processing on the output signal of the coding/modulating section 302 with a spreading code specified by a channel assigning section 315, and outputs the signal to a transmission RF section 304.

The transmission RF section 304 performs predetermined radio processing on the output signal of the spreading section 303 in a time slot specified by the channel assigning section 315, and outputs the signal to a duplexer 305.

The duplexer 305 carries out a transmitting/receiving switch so as to carry out radio transmitting/receiving using the same antenna, transmits the output signal of the transmission RF section 304 as a radio signal via an antenna 306, and outputs a signal received via the antenna 306 to a reception RF section 307.

The reception RF section 307 performs predetermined radio processing on the output signal of the duplexer 305 in a time slot specified by the channel assigning section 315, and outputs the signal to despreading section 308.

The despreading section 308 obtains a correlation between the spreading code specified by the channel assigning section 315 and a pilot signal portion in the output signal of the reception RF section 307 so as to generate a delay profile, and estimates an arrival time of the direct wave and a delayed wave. The despreading section 308 performs despreading processing on the received signal based on the estimated arrival time so as to separate the signal into a desired signal and an interference signal. The despreading section 308 outputs the signal after despreading processing to a demodulating/decoding section 309 and a received power measuring section 311 and outputs the signal indicating the arrival time of the direct wave to a timing deviation measuring section 313.

The demodulating/decoding section 309 performs demodulating processing and decoding processing on the output signal of the despreading section 308 and outputs the signal to an isolating section 310.

The isolating section 310 separates the output signal of the demodulating/decoding section 309 into a control signal and a received data and outputs the information, which indicates a desired signal received power of the downlink and an interference signal received power of a predetermined time slot contained in the control signal, to a CIR calculating section 312. When information indicating a call request is contained in the control signal, the isolating section 310 notices the fact to the received power measuring section 311 and the channel assigning section 315.

The received power measuring section 311 measures the desired signal received power and the interference signal received power of the predetermined time slot and outputs the result of the measurement to the CIR calculating section 312.

The CIR calculating section 312 calculates the CIR of the downlink based on the information indicating the respective received powers of the desired signal and the interference signal output from the isolating section 310 and calculates the CIR of the uplink based on the received power of the desired signal and the interference signal, respectively, measured by the received power measuring section 311, and outputs the signals to a channel assigning section 315.

The timing deviation measuring section 313 measures the reception timing deviation, which is a delay time of arrival time of the direct wave relative to a slot-front time based on internal clock.

The timetable 314 stores a table indicating a range of the reception timing deviation assigned to each slot.

The channel assigning section 315 refers to the timetable 314 and decides the order of the slots to be subjected to channel retrieval based on the reception timing deviation measured by the timing deviation measuring section 313. And then, the channel assigning section 315 performs a channel assignment of the downlink based on the CIR of the downlink, and performs a channel assignment of the uplink based on the CIR of the uplink.

The channel assigning section 315 controls the spreading section 303 and the transmission RF section 304 based on the result of channel assignment of the downlink, and controls the reception RF section 307 and the despreading section 308 based on the result of channel assignment of the uplink. Further, the channel assigning section 315 outputs the channel assigning information to the control signal multiplexing section 301. A detailed description of the channel assigning operation will be given later.

On the other hand, in the mobile station apparatus 400 shown in FIG. 6, a control signal multiplexing section 401 multiplexes the control signal to a transmission data. In the control signal to be multiplexed by the control signal multiplexing section 401, pilot signal, a desired signal received power of the downlink, an interference signal received power of a predetermined slot and information indicating a call request or the like are included.

The coding/modulating section 402 performs predetermined coding processing and modulating processing on the output signal of the control signal multiplexing section 401 and outputs the signal to a spreading section 403. The spreading section 403 performs spreading processing using a spreading code specified by a channel control section 412 on the output signal of the coding/modulating section 402, and outputs the signal to a transmission RF section 404.

The transmission RF section 404 performs predetermined radio processing on the output signal of the spreading section 403 in a time slot specified by the channel control section 412 and outputs the signal to a duplexer 405.

In order to carry out radio transmitting/receiving via the same antenna, the duplexer 405 switches between the transmission and the reception and transmits the output signal of the transmission RF section 404 via the antenna 406 as a radio signal, and outputs the signal received via the antenna 406 to the reception RF section 407.

The reception RF section 407 performs predetermined radio processing on the output signal of the duplexer 405 in a time slot specified by the channel control section 412 and outputs the signal to the despreading section 408.

The despreading section 408 obtains a correlation between the spreading code specified by the channel control section 412 and the pilot signal portion of the output signal of the reception RF section 407 so as to generate a delay profile and estimates the respective arrival times of the direct wave and the delayed wave. Further, the despreading section 408 performs despreading processing on the received signal based on the estimated arrival time and separates the desired signal and the interference signal. And, the despreading section 408 outputs the signal after the despreading to the demodulating/decoding section 409 and to the received power measuring section 411.

The demodulating/decoding section 409 performs demodulating processing and decoding processing on the output signal of the despreading section 408 and outputs the signal to the isolating section 410. The isolating section 410 separates the output signal of the demodulating/decoding section 409 to a control signal and a received data and outputs the channel assigning information contained in the output signal to the channel control section 412.

The received power measuring section 411 measures the respective received powers of the desired signal and the interference signal separated by the despreading section 408, and outputs the information indicating the result of the measurement to the control signal multiplexing section 401.

The channel control section 412 controls the spreading section 403, the transmission RF section 404, the reception RF section 407 and the despreading section 408 based on the channel assigning information.

Next, a description will be made as to the channel assignment in the base station apparatus 300.

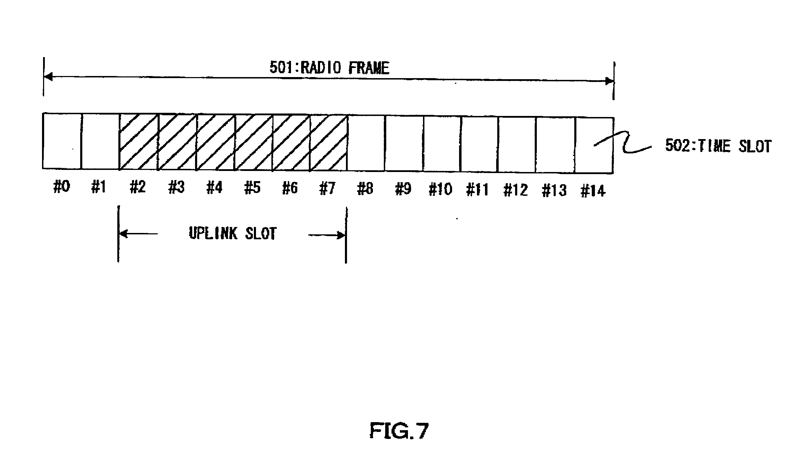

FIG. 7 is a diagram showing an example of a configuration of the radio frame according to the embodiment of the present invention. As shown in FIG. 7, a radio frame 501 is comprised of fifteen time slots from #0 to #14. In FIG. 7, the slots from #2 to #7 are assigned to the uplink channel respectively and the downlink is assigned to the predetermined time slots, respectively, as a pair with the uplink. For example, assuming that the time slot #2 and time slot #8 are made into a pair, the downlink of a channel, in which the time slot #2 is assigned to the uplink, is assigned with time slot #8.

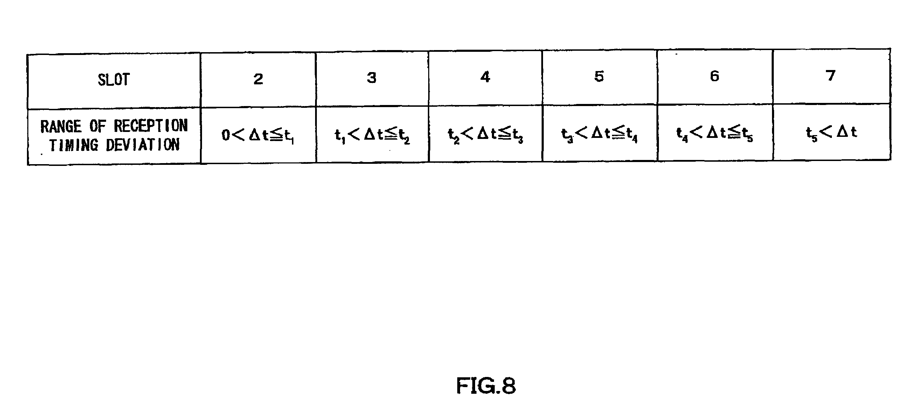

FIG. 8 is a diagram showing a table that indicates a range of reception timing deviations assigned to the respective slots stored in the timetable 314.

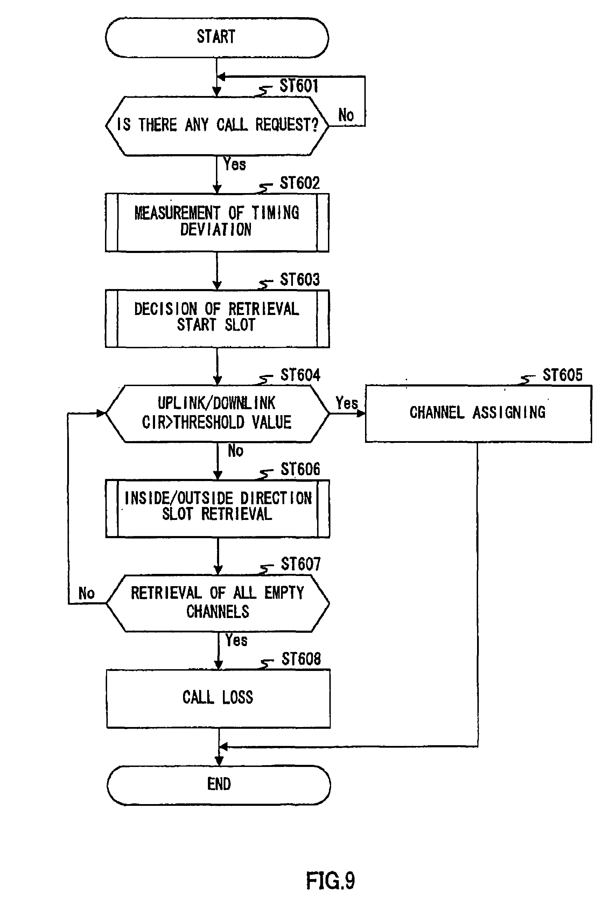

FIG. 9 is a flow sheet showing a channel assigning operation in the base station apparatus 300.

First of all, when a call request is made at ST601, a reception timing deviation is measured by the timing deviation measuring section 313 at ST602.

Then, at ST603, the channel assigning section 315 refers to the table stored in the timetable 314 and selects the slot corresponding to the measured reception timing deviation. For example, in FIG. 8, when the measured reception timing deviation Δt falls within t2 and t3, slot #4 is selected.

Then, at ST604, the channel assigning section 315 performs a large or small comparison between the uplink CIR and the downlink CIR of the selected slot and a preset threshold value.

When both of the uplink CIR and the downlink CIR are larger than the threshold value, the channel assigning section 315 assigns a call to the selected slot at ST605. On the other hand, when either the uplink CIR or the downlink CIR is not larger than the threshold value, slots are selected in the direction where the range of the reception timing deviation becomes shorter; when no slot with shorter range of the reception timing deviation resides therein, slots are selected in order in the direction where the range of the reception timing deviation becomes longer at ST604, ST606 and ST607. And in the selected slot, channel retrieval is made. For example, when the first selected slot is slot#4, the channel retrieval proceeds in the order that, i.e., slot#3, slot#2 and then slot#5, slot#6, slot#7.

When no un-retrieved channel resides any more therein, at ST608, the base station apparatus terminates the processing as a call loss.

As described above, according to the present invention, by determining the order for carrying out the channel retrieval based on the reception timing deviation, it is enabled to achieve the reuse partitioning even when the open loop transmitting power control is applied to the uplink.

This description is based on the Japanese Patent Application No.2000-228571 filed on July 28, 2000, entire content of which is expressly incorporated by reference herein.

### Industrial Applicability

The present invention is applicable to a mobile communication system of a cellular system, and preferably applicable to a base station apparatus which adopts dynamic channel assigning system.

## Claims

1. A base station apparatus comprising:
delay time measuring means for measuring propagation delay time of a radio channel; and
channel assigning means for carrying out channel retrieval in an order based on the propagation delay time measured by said delay time measuring means when carrying out channel assignment.

2. A base station apparatus according to claim 1 wherein the channel assigning means refers to a table that indicates a range of a propagation delay time assigned to each slot and carries out the channel retrieval from a slot in which the measured propagation delay time is within said range.

3. A communication terminal apparatus that carries out radio communication with the base station apparatus according to claim 1 comprising:
transmitting means for transmitting signals via a channel of the uplink assigned by said base station apparatus; and
receiving means for receiving signals via a channel of an assigned downlink.

4. A channel assigning method carrying out channel retrieval in an order based on a propagation delay time of a radio channel in autonomous distributed dynamic channel assigning system.

5. A channel assigning method according to claim 4 comprising steps of referring a table that indicates a range of a propagation delay time assigned to each slot and carrying out channel retrieval from a slot in which the measured propagation delay time is within said range.
